(19) Europäisches Patentamt
European Patent Office
Office européen des brevets

(11) Veröffentlichungsnummer: 0 305 840
A2

(12) # EUROPÄISCHE PATENTANMELDUNG

(21) Anmeldenummer: 88113607.1

(51) Int. Cl.4: C07F 9/65 , A01N 57/24

(22) Anmeldetag: 22.08.88

(30) Priorität: 02.09.87 DE 3729264

(43) Veröffentlichungstag der Anmeldung:
08.03.89 Patentblatt 89/10

(84) Benannte Vertragsstaaten:
BE CH DE FR GB IT LI NL

(71) Anmelder: BAYER AG
Konzernverwaltung RP Patentabteilung
D-5090 Leverkusen 1 Bayerwerk(DE)

(72) Erfinder: Maurer, Fritz, Dr.
Roebertstrasse 8
D-5600 Wuppertal 1(DE)
Erfinder: Becker, Benedikt, Dr.
Metzkausener Strasse 14
D-4020 Mettmann(DE)
Erfinder: Homeyer, Bernhard
Obere Strasse 28
D-5090 Leverkusen 3(DE)

(54) **Pyrimidinyl(thiono)(thiol)-phosphorsäureester.**

(57) Die Erfindung betrifft neue Pyrimidinyl(thiono)(thiol)-phosphorsäureester der allgemeinen Formel (I)

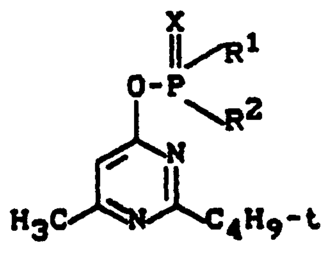

(I)

in welcher
$R^1$ für Alkoxy steht,
$R^2$ für Alkoxy oder Alkylthio steht und
X für Sauerstoff oder Schwefel steht,
mit der Maßgabe, daß die beiden Reste $R^1$ und $R^2$ gleich sind, wenn sie für Alkoxy stehen, welche als Schädlingsbekämpfungsmittel verwendet werden können.

EP 0 305 840 A2

# Pyrimidinyl(thiono)(thiol)-phosphorsäureester

Die Erfindung betrifft neue Pyrimidinyl(thiono)(thiol)-phosphorsäureester, ein Verfahren zu ihrer Herstellung und ihre Verwendung als Schädlingsbekämpfungsmittel, insbesondere als Insektizide, Akarizide und Nematizide.

Es ist bereits bekannt, daß bestimmte Pyrimidinyl(thiono)(thiol)-phosphorsäureester, wie z. B. O-Ethyl-S-n-propyl-O-(2-isopropyl-6-methyl-pyrimidin-4-yl)-thiono-thiolphosphorsäureester und 0,0-Diethyl-O-(2-methyl-6-tert.-butyl-pyrimidin-4-yl)-thionophosphorsäureester, pestizid wirksam sind (vgl. DE-OS 26 39 433; DE-OS 23 60 877). Die Wirkung und die Wirkungsdauer dieser bekannten Verbindungen sind jedoch, insbesondere bei niedrigen Aufwandmengen bzw. Wirkstoffkonzentrationen, nicht immer voll zufriedenstellen.

Es wurden nun neue Pyrimidinyl(thiono)(thiol)-phosphorsäureester der allgemeinen Formel (I)

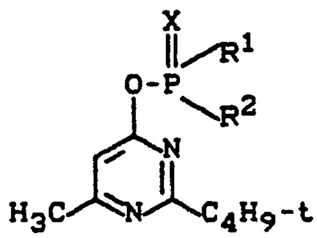

(I)

gefunden,
in welcher
$R^1$ für Alkoxy steht,
$R^2$ für Alkoxy oder Alkylthio steht und
X für Sauerstoff oder Schwefel steht,
mit der Maßgabe, daß die beiden Reste $R^1$ und $R^2$ gleich sind, wenn sie für Alkoxy stehen.

Weiterhin wurde gefunden, daß man die neuen Pyrimidinyl(thiono)(thiol)-phosphorsäureester der Formel (I) erhält,
wenn man 2-tert.-Butyl-4-hydroxy-6-methylpyrimidin der Formel (II)

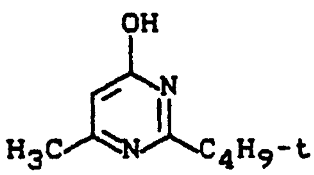

(II)

oder das entsprechende Alkalimetall-, Erdalkalimetall-oder Ammoniumsalz mit Halogeniden der Formel (III)

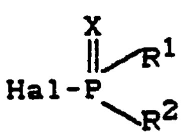

(III)

in welcher
$R^1$, $R^2$ und X die oben angegebene Bedeutung haben und
Hal für Halogen, vorzugsweise Chlor oder Brom steht,
gegebenenfalls in Gegenwart eines Säureakzeptors und gegebenenfalls in Gegenwart eines Verdünnungsmittels umsetzt.

Die neuen Pyrimidinyl(thiono)(thiol)phosphorsäureester der Formel (I) zeichnen sich in überragender Weise durch eine besonders hohe Wirksamkeit als Schädlingsbekämpfungsmittel, insbesondere als Insektizide, Akarizide und Nematizide aus.

Die erfindungsgemäßen Stoffe stellen somit eine wertvolle Bereicherung der Technik dar.

Unter dem Begriff Alkoxy in der Definition von $R^1$ und $R^2$ in den allgemeinen Formeln sind geradkettiges oder verzweigtes Alkoxy mit vorzugsweise 1 bis 6 Kohlenstoffatomen, beispielsweise die folgenden Gruppen zu verstehen: Methoxy, Ethoxy, Propoxy, Butoxy sowie ihre Isomeren, wie z. B. i-Propoxy, i-, s- und tert.-Butoxy. Besonders bevorzugte Alkoxyreste $R^1$ und $R^2$ enthalten 1 bis 4 Kohlenstoffatome. Besonders bevorzugt sind Methoxy-, Ethoxy-, n-Propoxy- und i-Propoxy und ganz besonders bevorzugt sind Methoxy und Ethoxy.

Unter dem Begriff Alkylthio in der Definition von $R^2$ in den allgemeinen Formeln sind geradkettiges oder verzweigtes Alkylthio mit vorzugsweise 1 bis 6 Kohlenstoffatomen, beispielsweise die folgenden Gruppen zu verstehen: Methylthio-, Ethylthio-, Propylthio-, Butylthio-, Pentylthio sowie ihre Isomeren, wie z. B. i-Propylthio, i-, s- und tert.-Butylthio, 1-Methyl-butylthio, 2-Methyl-butylthio- und 3-Methyl-butylthio. Besonders bevorzugte Alkylthioreste $R^2$ enthalten 1 bis 4 Kohlenstoffatome. Besonders bevorzugt sind Methylthio, Ethylthio, n-, i-, s-Propylthio und n-, i-, s- und tert.-Butylthio und ganz besonders bevorzugt sind n-Propylthio und s-Butylthio.

Von den erfindungsgemäßen Pyrimidinyl(thiono)(thiol)-phosphorsäureestern der Formel (I) sind diejenigen bevorzugt,
in welchen
$R^1$ für $C_1$-$C_4$-Alkoxy steht,
$R^2$ für $C_1$-$C_4$-Alkoxy und $C_1$-$C_4$-Alkylthio steht und
X für Sauerstoff oder Schwefel steht,
mit der Maßgabe, daß die beiden Reste $R^1$ und $R^2$ gleich sind, wenn sie für Alkoxy stehen.

Besonders bevorzugt sind diejenigen Pyrimidinyl(thiono)(thiol)-phosphorsäureester der Formel (I),
in welchen
$R^1$ für Methoxy, Ethoxy, n-Propoxy und i-Propoxy (vorzugsweise Methoxy und Ethoxy) steht,
$R^2$ für Methoxy, Ethoxy, n-Propoxy, i-Propoxy, Methylthio, Ethylthio, n- und i-Propylthio, n-, i-, s-und tert.-Butylthio (vorzugsweise Methoxy, Ethoxy, n-Propylthio und s-Butylthio) steht und
X für Sauerstoff oder Schwefel steht,
mit der Maßgabe, daß die beiden Reste $R^1$ und $R^2$ gleich sind, wenn sie für Alkoxy stehen.

Die für die Verbindungen der Formel (I) angegebenen bevorzugten Definitionen gelten auch für die Ausgangsverbindungen der Formel (III).

Im einzelnen seien außer den bei den Herstellungsbeispielen genannten Verbindungen die folgenden Verbindungen der Formel (I)

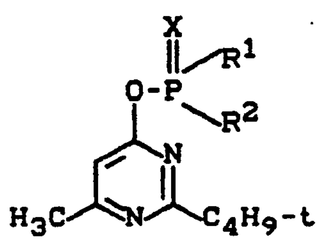

(I)

genannt:

Tabelle 1

| X | $R^1$ | $R^2$ |
|---|---|---|
| S | $OC_3H_7$-n | $OC_3H_7$-n |
| S | $OC_3H_7$-i | $OC_3H_7$-i |
| O | $OC_2H_5$ | $OC_2H_5$ |

Verwendet man beispielsweise für das erfindungsgemäße Verfahren 0,0-Diethyl-phosphorsäure-diesterchlorid und 2-tert.-Butyl-4-hydroxy-6-methyl-pyrimidin als Ausgangsstoffe, so kann die entsprechende Reaktion durch das folgende Formelschema skizziert werden:

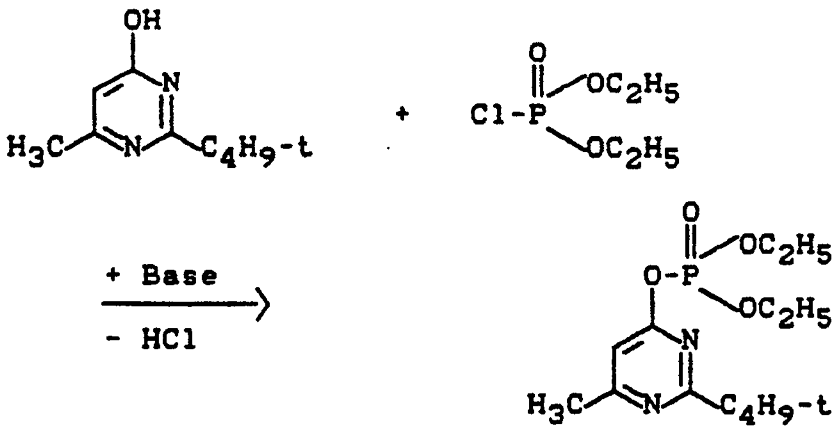


Das beim erfindungsgemäßen Verfahren als Ausgangsstoff für die Herstellung der neuen Verbindungen der Formel (I) einzusetzende 2-tert.-Butyl-4-hydroxy-6-methyl-pyrimidin bzw. das entsprechende Alkalimetall-, Erdalkalimetall- oder Ammoniumsalz sind durch die Formel (II) definiert. Als Alkali- oder Erdalkalimetallsalze werden vorzugsweise die Natrium-, Kalium- oder Calciumsalze eingesetzt.

Das 2-tert.-Butyl-4-hydroxy-6-methyl-pyrimidin ist bekannt (s. J. Chem. Soc. (London) 1963, 5652).

Die außerdem als Ausgangsstoffe einzusetzenden Halogenide sind durch die Formel (III) definiert. In dieser Formel steht $R^1$, $R^2$ und X für diejenigen Reste, welche bei der Definition in Formel (I) angegeben sind. Hal steht in dieser Formel für Halogen, wie insbesondere Chlor oder Brom.

Die Verbindungen der Formel (III) sind bekannt.

Als Beispiele für die Halogenide der Formel (III) seien genannt:

O,O-Dimethyl-, O,O-Diethyl-, O,O-Di-n-propyl-, O,O-Diisopropyl-phosphorsäurediesterchlorid sowie die entsprechenden Thionoderivate, ferner O-Methyl-S-methyl-, O-Methyl-S-ethyl-, O-Methyl-S-n-propyl-, O-Methyl-S-isopropyl-, O-Methyl-S-n-butyl-, O-Methyl-S-isobutyl, O-Methyl-S-sec.-butyl-, O-Methyl-S-tert.-butyl-, O-Ethyl-S-methyl-, O-Ethyl-S-ethyl-, O-Ethyl-S-n-propyl-, O-Ethyl-S- isopropyl-, O-Ethyl-S-n-butyl-, O-Ethyl-S-iso-butyl-, O-Ethyl-S-sec.-butyl-, O-Ethyl-S-tert.-butyl-thiolphosphorsäure-diesterchlorid sowie die entsprechenden Thionoderivate.

Das erfindungsgemäße Verfahren zur Herstellung der neuen Pyrimidin-4-yl-thionophosphorsäureester der Formel (I) wird bevorzugt unter Verwendung von Verdünnungsmitteln durchgeführt. Als Verdünnungsmittel kommen praktisch alle inerten organischen Lösungsmittel in Frage.

Hierzu gehören insbesondere aliphatische und aromatische, gegebenenfalls halogenierte Kohlenwasserstoffe, wie Pentan, Hexan, Heptan, Cyclohexan, Petrolether, Benzin, Ligroin, Benzol, Toluol, Xylol, Methylenchlorid, Ethylenchlorid, Chloroform, Tetrachlorkohlenstoff, Chlorbenzol, o-Dichlorbenzol, Ether wie Diethyl- und Dibutylether, Glykoldimethyleter und Diglykoldimethylether, Tetrahydrofuran und Dioxan, Ketone, wie Aceton, Methylethyl, Methylisopropyl- und Methylisobutylketon, Ester, wie Essigsäuremethylester und -ethylester, Nitrile, wie z. B. Acetonitril und Propionitril, Amide, wie z. B. Dimethylformamid, Dimethylacetamid und N-Methylpyrrolidon, sowie Dimethylsulfoxid, Tetramethylensulfon und Hexamethylphosphorsäuretriamid.

Das Verfahren kann gegebenenfalls in Gegenwart von Säureakzeptoren durchgeführt werden. Als Säureakzeptoren können alle üblichen Säurebindemittel Verwendung finden. Besonders bewährt haben sich Alkalicarbonate, wie Natrium- und Kaliumcarbonat, Alkalihydride, wie Natriumhydrid, ferner aliphatische, aromatische oder heterocycli sche Amine, beispielsweise Triethylamin, Trimethylamin, Dimethylanilin, Dimethylbenzylamin und Pyridin.

Das erfindungsgemäße Verfahren wird im allgemeinen bei Temperaturen zwischen 0 °C und 100 °C durchgeführt. Bevorzugt wird der Bereich zwischen 20 °C und 80 °C. Die Umsetzungen werden im allgemeinen bei Normaldruck durchgeführt.

Zur Durchführung des erfindungsgemäßen Verfahrens werden die Ausgangsstoffe gewöhnlich annähernd in äquimolaren Mengen eingesetzt. Ein Überschuß der einen oder anderen Reaktionskomponente bringt keine wesentlichen Vorteile. Die Umsetzung wird im allgemeinen in einem geeigneten Verdünnungsmittel in Gegenwart eines Säureakzeptors durchgeführt und das Reaktionsgemisch wird mehrere Stunden bei der erforderlichen Temperatur gerührt. Danach gibt man ein organisches Lösungsmittel, z. B. Toluol zu und arbeitet die organische Phase wie üblichen durch Waschen, Trocknen und Abdestillieren des Lösungsmittels auf. Die neuen Verbindungen fallen in Formel von Ölen an, die sich zum Teil nicht unzersetzt destillieren lassen, jedoch durch sogenanntes "Andestillieren", d. h. durch längeres Erhitzen unter vermindertem Druck auf mäßig erhöhte Temperaturen von den letzten flüchtigen Anteilen befreit und auf diese Weise gereinigt werden. Zu ihrer Charakterisierung dient der Brechungsindex.

Die Wirkstoffe eignen sich zur Bekämpfung von tierischen Schädlingen, vorzugsweise Arthropoden und Nematoden, insbesondere Insekten und Spinnentieren, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.
Aus der Ordnung der Dermaptera z.B. Forficula auricularia.
Aus der Ordnung der Isoptera z.B. Reticulitermes spp..
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrata, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicoryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varive stis, Atomaria spp., Oryzaephilus surinamensis, Antho nomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Cono derus spp., Melolontha melolontha, Amphimallon solsti tialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp..
Aus der Ordnung der Arachnida z.B. Scorpio maurus, Latrodectus mactans.
Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma

spp., Ixodes spp., Psoroptes spp., Chorioptes spp., Sarcoptes spp., Tarsonemus spp., Bryobia praetiosa, Panonychus spp., Tetranychus spp..

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp..

Die erfindungsgemäßen Wirkstoffe zeichnen sich durch hervorragende insektizide Wirksamkeit aus. So ist insbesondere die langanhaltende Wirkung gegen Bodeninsekten, wie z. B. Phorbia antiqua, die hervorragende Wirkung gegen Nematoden, wie z. B. Meloidogyne incognita, sowie die hervorragende Wirkung gegen pflanzenschädigende Insekten, wie z. B. Tetranychus-Arten, zu nennen.

Darüber hinaus zeigen einige der erfindungsgemäßen Wirkstoffe auch eine Wirkung gegen Hygiene- und Vorratsschädlinge.

Die Wirkstoffe können in Abhängigkeit von ihren jeweiligen physikalischen und/oder chemischen Eigenschaften in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Wirkstoffe können in ihren handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a..

Die Wirkstoffe können ferner in ihren handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne daß der zugesetzte Synergist selbst aktiv wirksam sein muß.

Der Wirkstoffgehalt der aus den handelsüblichen Formulierungen bereiteten Anwendungsformen kann in weiten Bereichen variieren. Die Wirkstoffkonzentration der Anwen dungsformen kann von 0,0000001 bis zu 95 Gew.-% Wirkstoff, vorzugsweise zwischen 0,0001 und 1 Gew.-% liegen.

Die Anwendung geschieht in einer den Anwendungsformen angepaßten üblichen Weise.

Bei der Anwendung gegen Hygiene- und Vorratsschädlinge zeichnen sich die Wirkstoffe durch eine hervorragende Residualwirkung auf Holz und Ton sowie durch eine gute Alkalistabilität auf gekälkten Unterlagen aus.

Die Herstellung und die Verwendung der erfindungsgemäßen Wirkstoffe wird durch die folgenden Beispiele erläutert.

Im vorliegenden Test beziehen sich alle Prozentangaben auf Gewichtsprozente, wo nichts anderes angegeben wird.

Herstellungsbeispiele

Beispiel 1

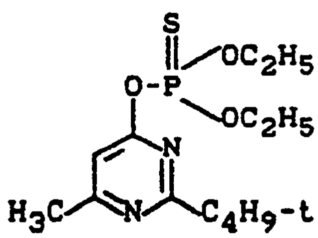

Eine Mischung aus 16,6 g (0,1 Mol) 4-Hydroxy-6-methyl-2-tert.-butyl-pyrimidin, 20,7 g (0,15 Mol) Kaliumcarbonat, 19 g (0,1 Mol) O,O-Diethyl-thionophosphorsäure-diesterchlorid und 100 ml Acetonitril wird 2 Stunden bei 50 °C gerührt. Dann wird auf 20 °C abgekühlt, mit 400 ml Toluol versetzt und zweimal mit je 200 ml Wasser geschüttelt. Die organische Phase wird abgetrennt, über Natriumsulfat getrocknet und im Vakuum eingedampft.

Nach Andestillieren bei 80 °C im Hochvakuum bleiben 28,9 g (91 % der Theorie) O,O-Diethyl-O-(6-methyl-2-tert.-butyl-pyrimidin-4-yl)-thionophosphorsäureester in Form eines hellgelben Öles mit dem Brechungsindex n

In analoger Weise zu Beispiel 1 und unter Berücksichtigung der Angaben in der Beschreibung zu dem erfindungsgemäßen Verfahren, werden die nachstehend aufgeführten Endprodukte der Formel (I)

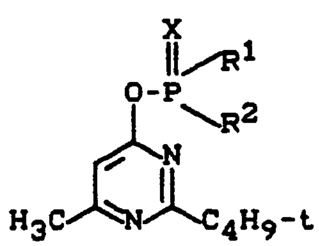

(I)

erhalten:

Tabelle 2

| Beisp.-Nr. | X | R¹ | R² | Brechungsindex $n_D^{21}$ |
|---|---|---|---|---|
| 2 | S | $OC_2H_5$ | $SC_3H_7$-n | 1,5324 |
| 3 | S | $OCH_3$ | $OCH_3$ | 1,5008 |
| 4 | O | $OC_2H_5$ | $SC_3H_7$-n | 1,5070 |
| 5 | O | $OC_2H_5$ | $SC_4H_9$-s | 1,5043 |
| 6 | S | $OC_2H_5$ | $SC_4H_9$-s | 1,5272 |

## Anwendungsbeispiele

In einigen der folgenden Anwendungsbeispiele werden die nachstehend aufgeführten Verbindungen als Vergleichssubstanzen eingesetzt:

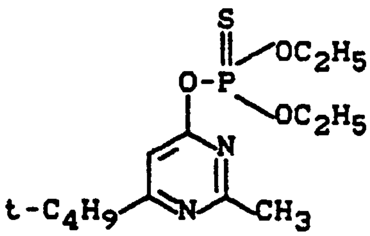

(A)

O,O-Diethyl-O-(2-methyl-6-tert.-butyl-pyrimidin-4-yl)-thionophosphorsäureester (bekannt aus DE-OS 26 39 433),

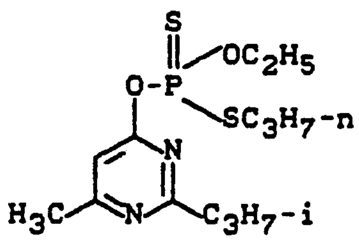

(B)

O-Ethyl-S-n-propyl-O-(2-isopropyl-6-methyl-pyrimidin-4-yl)-thionothiolphosphorsäureester (bekannt aus DE-OS 23 60 877).

## Beispiel A

Grenzkonzentrations-Test / Bodeninsekten

Testinsekt: Phorbia antiqua-Maden (im Boden)
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit dem Boden vermischt. Dabei spielt die Konzentration des

Wirkstoffes in der Zubereitung praktisch keine Rolle, entscheidend ist allein die Wirkstoffgewichtsmenge pro Volumeneinheit Boden, welche in ppm (= mg/l) angegeben wird. Man füllt den Boden in Töpfe und läßt diese bei Raumtemperatur stehen.

Nach 24 Stunden werden die Testtiere in den behandelten Boden gegeben und nach weiteren 2 bis 7 Tagen wird der Wirkungsgrad des Wirkstoffs durch Auszählen der toten und lebenden Testinsekten in % bestimmt. Der Wirkungsgrad ist 100 %, wenn alle Testinsekten abgetötet worden sind, er ist 0 %, wenn noch genau so viele Testinsekten leben wie bei der unbehandelten Kontrolle.

Bei diesem Test zeigten die Verbindungen der Beispiele (1), (2) und (3) bei einer beispielhaften Konzentration von 2,5 ppm einen Abtötungsgrad von 100 %, während bei der gleichen Konzentration die Vergleichsverbindung (A) keine Abtötung (0 %) ergab.

Beispiel B

Grenzkonzentrations-Test / Nematoden

Testnematode: Meloidogyne incognita
Lösungsmittel: 3 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Die Wirkstoffzubereitung wird innig mit Boden vermischt, der mit den Testnematoden stark verseucht ist. Dabei spielt die Konzentration des Wirkstoffs in der Zubereitung praktisch keine Rolle, entscheidend ist allein die Wirkstoffmenge pro Volumeneinheit Boden, welche in ppm angegeben wird. Man füllt den behandelten Boden in Töpfe, sät Salat ein und hält die Töpfe bei einer Gewächshaus-Temperatur von 27 °C.

Nach vier Wochen werden die Salatwurzeln auf Nematodenbefall (Wurzelgallen) untersucht und der Wirkungsgrad des Wirkstoffs in % bestimmt. Der Wirkungsgrad ist 100 %, wenn der Befall vollständig vermieden wird, er ist 0 %, wenn der Befall genau so hoch ist wie bei den Kontrollpflanzen in unbehandeltem, aber in gleicher Weise verseuchtem Boden.

Bei diesem Test zeigte z. B. die Verbindung (2) bei einer beispielhaften Konzentration von 10 ppm einen Abtötungsgrad von 100 %, während bei der gleichen Konzentration die Vergleichsverbindung (B) keine Abtötung (0 %) ergab.

Beispiel C

Tetranychus-Test (resistent)

Lösungsmittel: 7 Gewichtsteile Aceton
Emulgator: 1 Gewichtsteil Alkylarylpolyglykolether

Zur Herstellung einer zweckmäßigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschte Konzentration.

Bohnenpflanzen (Phaseolus vulgaris), die stark von allen Entwicklungsstadien der gemeinen Spinnmilbe oder Bohnenspinnmilbe (Tetranychus urticae) befallen sind, werden durch Tauchen in die Wirkstoffzubereitung der gewünschten Konzentration behandelt.

Nach der gewünschten Zeit wird die Abtötung in % bestimmt. Dabei bedeutet 100 %, daß alle Spinnmilben abgetötet wurden; 0 % bedeutet, daß keine Spinnmilben abgetötet wurden.

Bei diesem Test zeigten z. B. die Verbindungen der Beispiele (4), (5) und (6) bei einer beispielhaften Konzentration von 0,1 % nach 2 Tagen einen Abtötungsgrad von 98 % und die Verbindung aus Beispiel (2) einen Abtötungsgrad von 100 %, während bei der gleichen Konzentration die Vergleichsverbindung (A) nach 2 Tagen keine Abtötung (0 %) ergab.

## Ansprüche

1. Pyrimidinyl(thiono)(thiol)-phosphorsäureester der allgemeinen Formel (I)

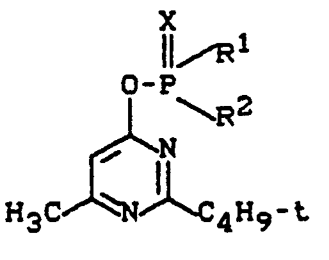

(I)

in welcher
$R^1$ für Alkoxy steht,
$R^2$ für Alkoxy oder Alkylthio steht und
X für Sauerstoff oder Schwefel steht,
mit der Maßgabe, daß die beiden Reste $R^1$ und $R^2$ gleich sind, wenn sie für Alkoxy stehen.

2. Verbindungen der Formel (I) gemäß Anspruch 1, in welchen
$R^1$ für $C_1$-$C_4$-Alkoxy steht,
$R^2$ für $C_1$-$C_4$-Alkoxy und $C_1$-$C_4$-Alkylthio steht und
X für Sauerstoff oder Schwefel steht,
mit der Maßgabe, daß die beiden Reste $R^1$ und $R^2$ gleich sind, wenn sie für Alkoxy stehen.

3. Verbindungen der Formel (I) gemäß Anspruch 1,
in welchen
$R^1$ für Methoxy, Ethoxy, n-Propoxy und i-Propoxy steht,
$R^2$ für Methoxy, Ethoxy, n-Propoxy, i-Propoxy, Methylthio, Ethylthio, n- und i-Propylthio, n-, i-, s-und tert.-Butylthio steht und
X für Sauerstoff oder Schwefel steht,
mit der Maßgabe, daß die beiden Reste $R^1$ und $R^2$ gleich sind, wenn sie für Alkoxy stehen.

4. Verbindungen der Formel (I) gemäß Anspruch 1,
in welchen
$R^1$ für Methoxy oder Ethoxy steht,
$R^2$ für Methoxy, Ethoxy, n-Propylthio oder s-Butylthio steht und
X für Sauerstoff oder Schwefel steht,
mit der Maßgabe, daß die beiden Reste $R^1$ und $R^2$ gleich sind, wenn sie für Alkoxy stehen.

5. Verfahren zur Herstellung der Pyrimidinyl(thiono)(thiol)-phosphorsäureester der allgemeinen Formel (I)

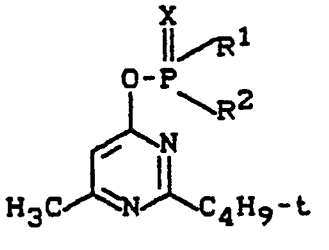

(I)

in welcher
$R^1$ für Alkoxy steht,
$R^2$ für Alkoxy oder Alkylthio steht und

X für Sauerstoff oder Schwefel steht,
mit der Maßgabe, daß die beiden Reste $R^1$ und $R^2$ gleich sind, wenn sie für Alkoxy stehen,
dadurch gekennzeichnet, daß man 2-tert.-Butyl-4-hydroxy-6-methylpyrimidin der Formel (II)

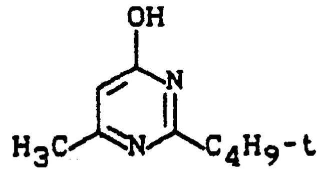

(II)

oder das entsprechende Alkalimetall-, Erdalkalimetall- oder Ammoniumsalz mit Halogeniden der Formel (III)

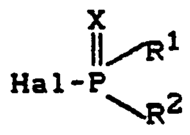

(III)

in welcher
$R^1$, $R^2$ und X die oben angegebene Bedeutung haben und
Hal für Halogen steht,
gegebenenfalls in Gegenwart eines Säureakzeptors und gegebenenfalls in Gegenwart eines Verdünnungsmittels umsetzt.

6. Schädlingsbekämpfungsmittel, gekennzeichnet durch einen Gehalt an mindestens einem Pyrimidinyl-(thiono)(thiol)-phosphorsäureester der Formel (I), gemäß den Ansprüchen 1 oder 5.

7. Verwendung von Pyrimidinyl(thiono)(thiol)-phosphorsäureester der Formel (I) gemäß den Ansprüchen 1 oder 5 zur Bekämpfung von Schädlingen.

8. Verfahren zur Bekämpfung von Schädlingen, dadurch gekennzeichnet, daß man Pyrimidinyl(thiono)-(thiol)-phosphorsäureester der Formel (I) gemäß den Ansprüchen 1 oder 5 auf Schädlinge und/oder ihren Lebensraum einwirken läßt.

9. Verfahren zur Herstellung von Schädlingsbekämpfungsmitteln, dadurch gekennzeichnet, daß man Pyrimidinyl(thiono)(thiol)-phosphorsäureester der Formel (I) gemäß den Ansprüchen 1 oder 5 mit Streckmitteln und/oder oberflächenaktiven Mitteln vermischt.